# EUROPEAN PATENT SPECIFICATION

(11) **EP 0 911 819 B1**
(45) Date of publication and mention of the grant of the patent: **25.01.2006**
(21) Application number: 98402559.3
(22) Date of filing: 15.10.1998
(51) Int. Cl.: G11B 7/12, G11B 7/125

(54) **Compact dual wavelenght optical pickup head**
Kompakter optischer Abtastkopf mit zweifacher Wellenlänge
Tête de lecture optique compacte à deux longeurs d'onde

(30) Priority: 27.10.1997 EP 97402539
(43) Date of publication of application: 28.04.1999
(73) Proprietor: DEUTSCHE THOMSON-BRANDT GMBH, 78048 Villingen-Schwenningen (DE)
(72) Inventor: Dietrich, Christoph, 92648 Boulogne Cedex (FR); Schröder, Heinz-Jörg, 92648 Boulogne Cedex (FR); Richter, Hartmut, 92648 Boulogne Cedex (FR); Dang, Lieu-Kim, 92648 Boulogne Cedex (FR)
(74) Representative: Zhang, Jianguo

(56) References cited:
- EP-A- 0 742 554
- EP-A- 0 747 893
- US-A- 5 703 856
- PATENT ABSTRACTS OF JAPAN vol. 097, no. 006, 30 June 1997 & JP 09 044885 A (SONY CORP), 14 February 1997
- PATENT ABSTRACTS OF JAPAN vol. 097, no. 001, 31 January 1997 -& JP 08 227534 A (MITSUBISHI ELECTRIC CORP), 3 September 1996

## Description

The present invention relates to a dual wavelength optical pickup head which may be used in an optical disk reading and/or writing device.

The dual wavelength optical pickup head allows to use light of different wavelengths in order to process disks of different thickness and/or different reflectivity of a reflecting layer. The dual wavelength optical pickup head may be used in most recent optical disk reading and/or writing devices, e.g. in DVD-ROM reading devices, in order to preserve a backward compatibility with older optical disk formats, e.g. a CD-R disk format. At least two characteristics of disks have to be taken into account to preserve the backward compatibility, namely a thickness and a reflectivity of the disks. DVD optical disks use a 0,6 mm thick substrate and may be read out using light with a wavelength of about 650 nm. CD-R optical disks use a substrate as thick as 1,2 mm and may be read out using light with a wavelength of about 780 nm. The CD-R optical disk has the drawback that it may not be read using light with a wavelength of about 650 nm because a special dye recovering its surface absorbs light of the latter wavelength.

A publication *Dual Wavelength optical Head for 0.6 mm and 1.2 mm Substrate Thicknesses,* R. Katayama, Y. Komatzu and Y. Ono, Jpn. J. Appl. Phys. Vol. 36 (1997) pp. 460-466, Part 1, No. 1B, January 1997, discloses an optical head which uses either holographic optical element type optics or variable magnification type optics. The optical head may be used with 0,6 and 1,2 mm substrate thicknesses and contains 635 nm and 785 nm laser diodes. The optical head comprises a single polarizing beam splitter and a set of signal detection optics for each 635 nm and 785 nm light beam.

Japanese Patent Application Abstract JP-A-09044885 discloses an optical pickup capable of reproducing plural optical disks different in thickness using the same optical system. Light from a first or a second laser diode passes through a beam splitter and is focused onto an optical disk by a focusing lens optimized for a first thickness of the optical disk. Light reflected by the optical disk is directed onto a photodetector by a further beam splitter. In the beam path of one of the laser diodes a spherical aberration correction element is provided for correcting the spherical aberration occurring when the light is focused on an optical disk having a second thickness.

European Patent Application EP-A-0 860 819, which is to be considered for the question of novelty only (Art 54(3) and (4) EPC) discloses an optical pickup using two semiconductor lasers with different wavelengths. The two semiconductor lasers and a photodetector are combined in a single housing. The light beams emitted by the semiconductor lasers are focused onto an optical disk having either a first thickness or a second thickness. A hologram is used for directing either of the light beams emitted by the semiconductor lasers and reflected by the optical disk onto the photodetector.

European Patent Application EP-A-0.742.554 is used for defining the preamble of claim 1. It shows an optical pickup using two laser diodes of different wavelength and a single detector, for receiving the light of both wavelength reflected from the appropriate disc. Moreover, it shows the combination of the two laser beams by a polarizing beam splitter and a collimating lens is used in the emitting path while another lens is used for focusing the receiving light onto the detector.

Consumer product industries strive to reduce the size of their products in order to make them portable and cheaper. These efforts impose a miniaturization and/or a reduction of the number of parts in components making up the products. This would apply e.g. to the optical head of a portable and/or cheaper optical disk reading and/or writing device. On the other hand small components should be just as reliable as their more voluminous equivalents.

One aim of the present invention is to find a solution to reduce the size of an optical head without increasing its cost.

A solution to the problem laid out above is according to the present invention found in a dual wavelength optical pickup head for use in an optical disk writing and/or reading device which comprises at least optical means for directing light beams of a first and a second wavelength emitted by a first and a second light source to an optical disk. The optical means comprise at least a wavelength selective beam splitter which allows to at least partially change the direction of a light beam of the first wavelength and is transmissive for a light beam of the second wavelength. The optical pickup head further comprises focusing means for focusing the light beams on a layer of the optical disk, photodetection means for detecting light of each one of the first or the second wavelength reflected by the layer of the optical disk, and further optical means for directing a reflected light beam reflected by the layer to the photodetection means. The photodetection means comprise a single detector which allows to detect light of either the first or the second wavelength.

The solution according to the present invention does not require the separate sets of detection optics for each wavelength of light. It allows to optimize the use of as many common components as possible for both wavelengths. Thus the size of the optical pickup head and the number of parts making it up are reduced.

in a preferred embodiment of the dual wavelength optical pickup according to the invention the focusing means comprise a dual focus lens objective.

The dual focus lens objective allows to overcome a problem of compensation for spherical aberration due to different substrate thicknesses of different optical disks.

In another preferred embodiment of the dual wavelength optical pickup according to the invention the further optical means comprise a plate which allows to partially change a direction of a light beam of the second wavelength, is transmissive for a light beam of the first wavelength and is positioned such to render astigmatic said reflected light beam reaching said photodetection means.

The other preferred embodiment allows to use an astigmatic property of the reflected light beam which may for example be of use in a focus control circuit without affecting the compactness of the optical pickup head.

In a further preferred embodiment of the dual wavelength optical pickup head according to the invention the optical means comprise polarizing plane rotating means to rotate a direction of polarization of said light beams.

The further preferred embodiment allows to avoid that the reflected light beam reaches the light sources. This feature is particularly advantageous for optical pickup heads which are used also for writing on the optical disk.

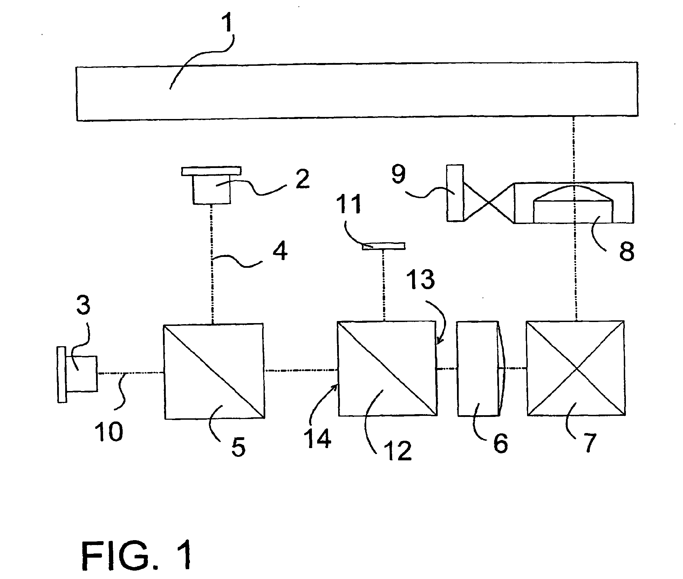

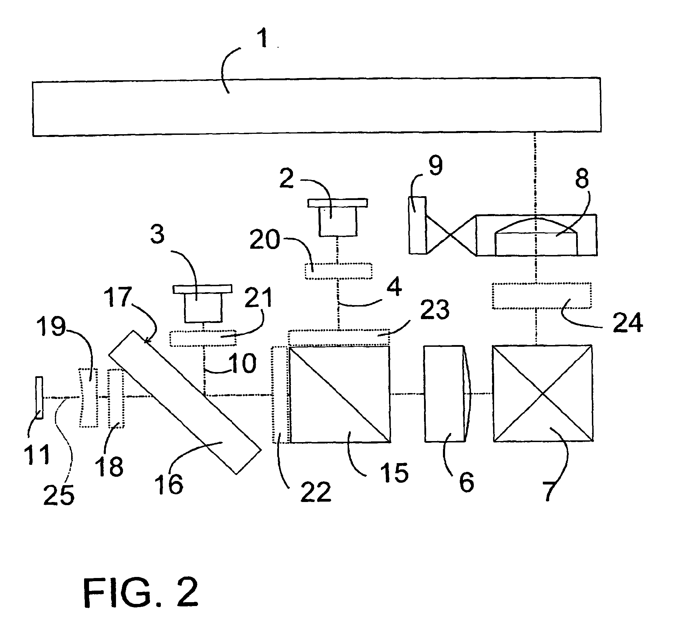

The invention will in the following be explained using examples to explicit some of its features and FIGs 1 and 2 wherein :
- FIG. 1 contains a schematic representation of a first embodiment according to the invention,
- FIG. 2 contains a schematic representation of a second embodiment according to the invention.

All along the following description same numbers will be used to reference same parts which appear in both FIGs 1 and 2.

FIG. 1 schematically shows some parts of a dual wavelength optical pickup head which is designed for use in an optical disk writing and/or reading device (not shown). The optical pickup head may be used to write and/or read on an optical and/or magneto-optical medium 1 using light with a first wavelength and/or a second wavelength which is emitted respectively from a first light source 2 and a second light source 3. Preferably the light sources 2 and 3 are laser diodes. The first and second wavelengths may for example be around 650 nm and 780 nm. It is understood here that shorter wavelengths may be considered in the scope of the invention.

A first light beam 4 emitted by the first light source 2 is directed to the medium 1 by optical means. These optical means comprise a beam splitter 5 which reflects the first light beam 4, a collimator lens 6, a mirror 7 and an objective 8. Typically the objective 8 is actuated by an actuator 9 controlled by a focus control circuit (not shown) such as to keep a light spot (not shown) focused on a reflecting layer (not shown) of the medium 1. Said reflecting layer contains information.

A second light beam 10 emitted by the second light source 3 is also directed to the medium 1 by the optical means. The beam splitter 5 is used as a beam coupler for the second light beam 10 to direct the latter to the collimator 6.

The objective 8 may be optimized for use with light emitted by the first light source 2 and for a determined thickness of the medium 1. In this case some compensation optics (not shown) may be required for light emitted by the second light source 3.

Preferably the objective 8 is a dual focus lens objective.

The first light beam 4 and the second light beam 10 are typically used to read and / or write a first and a second kind of information respectively. Said first and second kind of information may be located on the same layer or on two layers of different level of thickness on the medium 1. Said first and said second kind of information may also be contained on a layer in a first medium and on a layer in a second medium respectively. It is understood that only one medium at the time can be read i.e. either the first medium or the second medium. The first medium has its layer at a different level of thickness than the layer in the second medium. The dual focus lens objective allows to take these levels of thicknesses into account such that a light spot obtained with the dual focus lens objective is focused on a reflecting layer of the medium.

The first light beam 4 and/or the second light beam 10 are reflected from a reflective layer of the medium 1 and the reflected beams are directed on photodetection means 11 by further optical means. The further optical means have the objective 8, the mirror 7 and the collimator 6 in common with the optical means. In addition the further optical means comprise decoupling means 12 to redirect the reflected beams towards the photodetection means 11. The decoupling means 12 may for example be realized using a beam splitter which is designed to reflect at least partially the reflected beams entering on a surface 13 and to transmit the first light beam 4 and the second light beam 10 entering on a surface 14.

The photodetection means 11 typically comprise a photodetector (not shown). Depending on determined geometrical characteristics of the reflected light beam(s) the photodetector may have one or a plurality of detection elements as it is well known from a man skilled in the art.

The dual wavelength optical pickup head as shown in FIG. 1 is designed such that most of its parts making up the optical and the further optical means are used by the emitted and reflected light beams of both wavelengths. This keeps the number of component parts as low as possible and allows to reduce dimensions of the optical pickup head at a minimum value as compared to known prior art where more components parts are required. Furthermore the parts used are of widespread use in the optical pickup head industry which allows to keep a price of the optical pickup head at a low level.

FIG. 2 contains a schematic representation of a second embodiment of the optical pickup head. The optical means comprise a beam splitter 15 designed to partially reflect the first light beam 4 in order to direct the latter to the collimator lens 6. The optical means also comprise a plate 16 which partially reflects the second light beam 10 entering on its surface 17, to direct it to the collimator lens 6 via the beam splitter 15. The beam splitter 15 has a relatively high degree of transmissivity for light of the second light beam 10. A layer of the medium 1 reflects the first light beam 4 and/or the second light beam 10 and the reflected light beams are directed to photodetection means 11 via the objective 8, the mirror 7, the collimator lens 6, the beam splitter 15 and the plate 16 which make up the further optical means. Thus the further optical means have many parts in common with the optical means. This structure inside the optical pickup head allows to reduce dimensions of the optical pickup head at a minimum value as is the case for the one showed in FIG. 1

The plate 16 is positioned in an inclined manner such that the reflected light beam(s) passing through it becomes astigmatic. This property of the astigmatic reflected beam may be used to perform focus control, i.e. to monitor the focus of the light spot on the reflective layer of the medium 1. This is well known from a man skilled in the art and described in known prior art. Typically the photodetection means 11 will have four detection elements which form four quadrants and allow to determine a focus position of the light beam based on the shape of an ellipse formed by the reflected beam(s) on the photodetection means 11.

An optional projecting means comprising a lens 18 and/or a cylindrical lens 19 may be added to the further optical means as shown using dotted lines in FIG. 2 between the plate 16 and the photodetection means 11. The optional projecting means allow to improve a quality of projection of the reflected beam(s) on the photodetection means 11. The lens 18 is used for example to modify the astigmatic effect in the astigmatic reflected beam and to adapt a size of the projection such that it better matches a surface of the detector elements. The cylindrical lens 19 is used to adjust the astigmatic effect in the reflected beam. The cylindrical lens 19 may be used as an alternative means to render the reflected beam passing through it astigmatic and the plate 16 may then be replaced by a simple beam splitter (not shown).

Optionally the optical means may comprise diffraction means which split the first light beam 4 and/or the second light beam 10 in a central O-order and in two 1st-order beams. The diffraction means may for example be realized using gratings 20 and/or 21 shown using dotted lines in FIG. 2 which are placed in the first light beam 4 and the second light beam 10, and compensators 22 and/or 23 respectively for gratings 20 and/or 21 also shown using dotted lines. The thus obtained 1st order beams may be used to perform tracking using for example the 3 beam tracking method well known by a man skilled in the art.

In a preferred option the diffraction means are realized using a hologram instead of the gratings 20 and / or 21.

Also optionally the optical means may comprise polarizing plane rotating means 24 to rotate a direction of polarization of said light beams. These polarizing plane rotating means may for example be realized using a quarterwave plate. This feature is particularly useful to avoid that reflected light beams reach the light sources 2 and / or 3. This feature is particularly useful in optical pickup heads designed specially for writing.

The parts making up the embodiments of the optical pickup heads shown in FIGs 1 and 2 are geometrically positioned relatively to each other such that an optical axis of the objective 8, the first light beam 4, the second light beam 10 and the reflected light beam(s) are comprized in a single plane. However variations of the geometrical position of the parts making up the optical head relatively to each other in space may be performed by a man skilled in the art and remain in the scope of the present invention. One example for such a variation would be to rotate in FIG. 2 the objective 8, the actuator 9 and the mirror 7 by 90 degrees around an optical axis 25 going through the photodetection means 11 and the plate 16. Another example for such a variation would be to rotate the first light source 2 and the beam splitter 15 around said optical axis 25.

## Claims

1. Dual wavelength optical pickup head for use in an optical disk writing and/or reading device comprising at least
- optical means (5, 6, 7; 15, 16) for directing light beams (4, 10) of a first and a second wavelength emitted by a first and a second light source (2, 3) to an optical disk (1),
- a dual focus lens objective (8) for focusing said light beams on a layer of said optical disk (1),
- photodetection means (11) for detecting light of each one of said first or said second wavelength reflected by said layer of said optical disk (1), said photodetection means (11) comprising a single detector which detects light beams of said first and said second wavelength, and
- further optical means (6, 7, 12; 15) for directing a reflected light beam reflected by said layer to said photodetection means,
**characterized in that** said optical means comprise at least
- a wavelength selective beam splitter (5, 15), which at least partially changes the direction of a light beam (4) of said first wavelength and is transmissive for a light beam (10) of said second wavelength, and
- a collimator lens (6) for collimating said light beams (4, 10) emitted by said first and said second light source (2, 3) and for focusing said light of each one of said first or said second wavelength reflected by said layer of said optical disk (1) onto said photodetection means (11).

2. Dual wavelength optical pickup head according to claim 1, **characterized in that** said single detector has a plurality of detection elements.

3. Dual wavelength optical pickup head according to claim 2, **characterized in that** said further optical means comprise a plate (16) which partially changes a direction of a light beam of said second wavelength, is transmissive for a light beam of said first wavelength and is positioned such to render astigmatic said reflected light beam reaching said photodetection means (11).

4. Dual wavelength optical pickup head according to claim 3, **characterized in that** said further optical means comprise projecting means (18, 19) to project the reflected light beam on said plurality of detection elements of said single detector.

5. Dual wavelength optical pickup head according to anyone of claims 1 to 4, **characterized in that** said optical means comprise diffraction means (20, 21) for creating diffraction in either one of said light beams of said first or said second wavelength.

6. Dual wavelength optical pickup head according to claim 5, **characterized in that** said diffraction means comprise a grating.

7. Dual wavelength optical pickup head according to claim 5, **characterized in that** said diffraction means comprise a hologram:

8. Dual wavelength optical pickup head according to anyone of claims 1 to 7, **characterized in that** said optical means comprise polarizing plane rotating means to rotate a direction of polarization of said light beams.

9. Dual wavelength optical pickup head according to claim 8, **characterized in that** said polarizing plane rotating means comprise a quaterwave plate.

10. Dual wavelength optical pickup head according to anyone of claims 1 to 9, **characterized in that** said light beams of said first and said second wavelength remain in a plane which contains an optical axis of said focusing means.

## Patentansprüche

1. Optischer Aufnahmekopf mit zweifacher Wellenlänge zur Anwendung in einem optischen Schreib- und/oder Lesegerät für eine optische Platte mit wenigstens:
- optischen Mitteln (5,6,7; 15, 16) zur Richtung von Lichtstrahlen (4,10) einer ersten und einer zweiten Wellenlänge, die durch eine erste und eine zweite Lichtquelle (2,3) emittiert werden, auf eine optische Platte (1),
- einem Dualfokus-Linsenobjektiv (8) zur Fokussierung der Lichtstrahlen auf eine Schicht der optischen Platte (1),
- Photodetektionsmitteln (11) zur Detektion von Licht jeder der ersten und der zweiten Wellenlänge, das durch die Schicht der optischen Platte(1) reflektiert wird, wobei die Photodetektionsmittel (11) einen einzigen Detektor enthalten, der die Lichtstrahlen mit der ersten und der zweiten Wellenlänge detektiert, und
- ferner optischen Mitteln (6, 7, 12; 15) zur Richtung eines durch die Schicht zu den Photodetektionsmittel reflektierten Lichtstrahls,
**dadurch gekennzeichnet, dass** die optischen Mittel wenigstens folgendes enthalten:
- einen selektiven Wellenlängen-Strahlspalter (5, 15), der wenigstens die Richtung eines Lichtstrahls (4) der ersten Wellenlänge teilweise ändert und für einen Lichtstrahl (10) der zweiten Wellenlänge durchlässig ist, und
- eine Kollimatorlinse (6) zur Kollimation der durch die erste und die zweite Lichtquelle (2,3) emittierten Lichtstrahlen (4, 10) und zur Fokussierung des Lichts jeder der ersten oder zweiten Wellenlänge, reflektiert durch die Schicht der optischen Platte (1) auf die Photodetektionsmittel (11).

2. Optischer Aufnahmekopf mit zweifacher Wellenlänge nach Anspruch 1, **dadurch gekennzeichnet, dass** der einzige Detektor mehrere Detektionselemente enthält.

3. Optischer Aufnahmekopf mit zweifacher Wellenlänge nach Anspruch 2, **dadurch gekennzeichnet, dass** die weiteren optischen Mittel eine Platte (16) enthalten, die teilweise die Richtung eines Lichtstrahls mit der zweiten Wellenlänge ändert, durchlässig ist für einen Lichtstrahl der ersten Wellenlänge und so positioniert ist, dass der die Photodetektionsmittel (11) erreichende Lichtstrahl astigmatisch gemacht wird.

4. Optischer Aufnahmekopf mit zweifacher Wellenlänge nach Anspruch 3, **dadurch gekennzeichnet, dass** die weiteren optischen Mittel Projektionsmittel (18,19) enthalten zur Projektion des reflektierten Lichtstrahls auf die mehreren Detektionselemente des einzigen Detektors.

5. Optischer Aufnahmekopf mit zweifacher Wellenlänge nach einem der Ansprüche 1 bis 4, **dadurch gekennzeichnet, dass** die optischen Mittel Beugungsmittel (20, 21) enthalten zur Erzeugung einer Beugung in einem der Lichtstrahlen mit der ersten oder der zweiten Wellenlänge.

6. Optischer Aufnahmekopf mit zweifacher Wellenlänge nach Anspruch 5, **dadurch gekennzeichnet, dass** die Beugungsmittel ein Gitter enthalten.

7. Optischer Aufnahmekopf mit zweifacher Wellenlänge nach Anspruch 5, **dadurch gekennzeichnet, dass** die Beugungsmittel ein Hologramm enthalten.

8. Optischer Aufnahmekopf mit zweifacher Wellenlänge nach einem der Ansprüche 1 bis 7, **dadurch gekennzeichnet, dass** die optischen Mittel Drehmittel für die Polarisationsebene enthalten, um eine Richtung der Polarisation der Lichtstrahlen zu drehen.

9. Optischer Aufnahmekopf mit zweifacher Wellenlänge nach Anspruch 8, **dadurch gekennzeichnet, dass** die Drehmittel für die Polarisationsebene eine Viertelwellenplatte enthalten.

10. Optischer Aufnahmekopf mit zweifacher Wellenlänge nach einem der Ansprüche 1 bis 9, **dadurch gekennzeichnet, dass** die Lichtstrahlen der ersten und zweiten Wellenlänge in einer Ebene verbleiben, die eine optische Achse der Fokussiermittel einnimmt.

## Revendications

1. La tête de lecture optique à deux longueurs d'onde à utiliser dans un dispositif de lecture et/ou d'écriture de disque optique comprend au moins
- des moyens optiques (5, 6, 7 ; 15, 16) pour diriger les faisceaux lumineux (4, 10) d'une première et d'une seconde longueurs d'onde émis par une première et une seconde sources lumineuses (2, 3) vers un disque optique (1),
- une lentille de focalisation à deux foyers (8) pour focaliser lesdits faisceaux lumineux sur une couche dudit disque optique,
- des moyens de photodétection (11) pour détecter la lumière de chacune de ladite première longueur d'onde ou de ladite seconde longueur d'onde réfléchie par ladite couche dudit disque optique, lesdits moyens de photodétection (11) comprenant un seul détecteur qui détecte les faisceaux lumineux de ladite première et de ladite seconde longueurs d'onde, et
- des moyens optiques supplémentaires (6, 7, 12 ; 15) pour diriger un faisceau lumineux réfléchi, réfléchi par ladite couche vers lesdits moyens de photodétection, **caractérisés en ce que** lesdits moyens optiques comprennent au moins
- un séparateur de faisceau à sélection de longueurs d'onde (5,15) qui change au moins partiellement la direction d'un faisceau lumineux (4) de ladite première longueur d'onde et est transmissif pour un faisceau lumineux (10) de ladite seconde longueur d'onde, et
- une lentille de collimateur (6) pour collimater lesdits faisceaux lumineux (4, 10) émis par ladite première et ladite seconde sources de lumière (2, 3) et pour focaliser ladite lumière de chacune de ladite première et de ladite seconde longueurs d'onde réfléchie par ladite couche dudit disque optique (1) vers lesdits moyens de photodétection (11).

2. Une tête de lecture optique à deux longueurs d'onde selon la revendication 1, **caractérisée en ce que** ledit détecteur unique a une pluralité d'éléments de détection.

3. Une tête de lecture optique à deux longueurs d'onde selon la revendication 2, **caractérisée en ce que** lesdits moyens optiques supplémentaires comprennent un plateau (16) qui permet de changer partiellement une direction d'un faisceau lumineux de ladite seconde longueur d'onde, est transmissif pour un faisceau lumineux de ladite première longueur d'onde et est positionné de manière à rendre astigmatique ledit faisceau lumineux réfléchi atteignant lesdits moyens de photodétection (11).

4. Une tête de lecture optique à deux longueurs d'onde, selon la revendication 3, **caractérisée en ce que** lesdits moyens optiques supplémentaires comprennent des moyens de projection (18, 19) pour projeter le faisceau lumineux réfléchi sur ladite pluralité d'éléments de détection dudit détecteur unique.

5. Une tête de lecture optique à deux longueurs d'onde selon n'importe quelle revendication 1 à 4, **caractérisée en ce que** lesdits moyens optiques comprennent des moyens de diffraction (20, 21) pour créer une diffraction dans l'un desdits faisceaux lumineux de ladite première ou de ladite seconde longueur d'onde.

6. Une tête de lecture optique à deux longueurs d'onde, selon la revendication 5, **caractérisée en ce que** lesdits moyens de diffraction comprennent un réseau.

7. Une tête de lecture optique à deux longueurs d'onde, selon la revendication 5, **caractérisée en ce que** lesdits moyens de diffraction comprennent un hologramme.

8. Une tête de lecture optique à deux longueurs d'onde, selon l'une des revendications 1 à 7, **caractérisée en ce que** lesdits moyens optiques comprennent des moyens de rotation du plateau polarisant pour faire pivoter une direction de polarisation desdits faisceaux lumineux.

9. Une tête de lecture optique à deux longueurs d'onde, selon la revendication 8, **caractérisée en ce que** lesdits moyens de rotation du plateau polarisant comprennent une lame quart d'onde.

10. Une tête de lecture optique à deux longueurs d'onde, selon n'importe quelle des revendications 1 à 9, **caractérisée en ce que** lesdits faisceaux lumineux de ladite première et de ladite seconde longueur d'onde restent dans un plateau qui contient un axe optique desdits moyens de focalisation.
